# EUROPEAN PATENT APPLICATION

(11) **EP 4 507 268 A1**
(43) Date of publication of application: **12.02.2025**
(21) Application number: 22936396.5
(22) Date of filing: 16.12.2022
(51) Int. Cl.: H04L 45/00

(54) **ADDRESS SETTING METHOD AND DEVICE, STORAGE MEDIUM, AND ELECTRONIC DEVICE**

(30) Priority: 08.04.2022 CN 202210367660
(71) Applicant: ZTE Corporation, Shenzhen, Guangdong 518057 (CN)
(72) Inventor: XIAO, Min, Shenzhen, Guangdong 518057 (CN)
(74) Representative: Brunazzi, Stefano
(86) International application number: PCT/CN2022/139717
(87) International publication number: WO 2023/193471

(57) **Abstract**

An address setting method and device, a storage medium, and an electronic device are provided. The address setting method includes: adding, by an encapsulation node, an Internet Protocol Version 6 (IPv6) routing header to a Segment Routing with IPv6 data plane (SRv6) packet including compressed Segment Identifiers (uSIDs); and setting a first IPv6 address of the IPv6 routing header to be an IPv6 address of a last endpoint node corresponding to the SRv6 packet, so as to determine a basis for checksum calculation. By means of the technical solution, the problem in the related art that when an SRv6 packet uses an encapsulation method of using an IPv6 destination address to carry multiple compressed SIDs, a basis for checksum calculation of the SRv6 packet cannot be determined is solved.

## Description

The present disclosure claims priority to Chinese Patent Application No. 202210367660.8, filed with the China National Intellectual Property Administration on April 8, 2022 and entitled "Address Setting Method and Device, Storage Medium, and Electronic Device", which is incorporated herein by reference in its entirety.

### Technical Field

The present disclosure relates to the field of communications, and in particular, to an address setting method and device, a storage medium, and an electronic device.

### Background

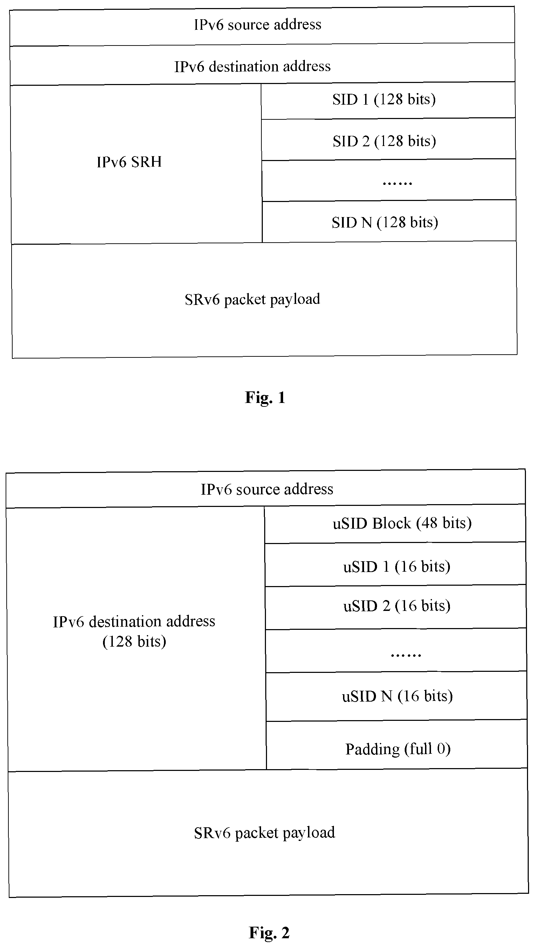

With widespread application of the Segment Routing with Internet Protocol Version 6 (IPv6) data plane (SRv6) technology, a drawback of the SRv6 technology, i.e., excessive overhead when a Segment Routing Header (SRH) carried in an SRv6 packet includes multiple Segment Identifiers (SIDs), has gradually become apparent. Taking Fig. 1 as an example, Fig. 1 is a schematic diagram of an encapsulation format of an SRv6 packet carrying an SRH that includes multiple SIDs in the related art. As shown in Fig. 1, the SRv6 packet is also an IPv6 packet, each SID included in the SRH is a 128-bit IPv6 address, and the total length of the multiple SIDs included in the SRH, which is the total length of the multiple IPv6 addresses, consumes a significant amount of space in the SRv6 packet. This can greatly reduce transmission efficiency, especially when the total length of the SRv6 packet is limited by a Maximum Transmission Unit (MTU) of the transmission path. The number of SIDs included in the SRH carried in the SRv6 packet is determined by the number of Segment Endpoint (SE) nodes that the SRv6 packet needs to pass through. Some application scenarios require the SRv6 packet to pass through multiple SE nodes, making it difficult to avoid the problem of excessive overhead in the traditional SRv6 technology.

To address this problem, the Internet Engineering Task Force (IETF) has proposed a method to mitigate the problem of excessive overhead in the SRv6 packet carrying multiple SIDs. This method involves compressing the 128-bit SIDs in the traditional SRv6 technology into 16-bit compressed SIDs (referred to as Micro SIDs, short as uSIDs) and including the uSIDs directly in the IPv6 destination address carried by the SRv6 packet. Taking Fig. 2 as an example, Fig. 2 is a schematic diagram of an encapsulation format of an SRv6 packet carrying an IPv6 destination address that includes multiple uSIDs in the related art. In Fig. 2, the IPv6 destination address is divided into two parts: a compressed SID block identifier (uSID Block) and a compressed SID value (uSID values). Each SE node modifies the IPv6 destination address of the SRv6 packet by keeping the uSID Block unchanged and offsetting the uSID values by 16 bits, so that the 16-bit uSID following the uSID Block in the IPv6 destination address always points to the next SE node.

While the method proposed by IETF effectively addresses the problem of excessive overhead in the SRv6 packet carrying multiple SIDs, it also introduces a new problem related to calculating and verifying a checksum of the SRv6 packet when the encapsulation method of using the IPv6 destination address to carry multiple compressed SIDs is adopted. The SRv6 packet is an IPv6 packet, so the IETF standard RFC 8200 should be followed for the description of IPv6 packet checksum calculation. According to the RFC 8200 standard, an IPv6 packet header itself does not carry a checksum field, and the validity checking of the IPv6 packet is implemented through a packet header of an upper layer protocol, for example, a Transmission Control Protocol (TCP) packet header, a User Datagram Protocol (UDP) packet header or an Internet Control Message Protocol version 6 (ICMPv6) packet header may carry a checksum field, and the checksum field may be calculated based on information including the IPv6 destination address. Optionally, when the IPv6 packet does not carry a Routing Header (RH), the IPv6 destination address may be used as a basis for calculating the checksum. It should be noted that the SRH is an RH with a value of a Routing Type (RT) being 4. When the IPv6 packet carries the RH, the first IPv6 address included in the RH, that is, the IPv6 address of the last endpoint node of the IPv6 packet, is used as a basis for calculating the checksum. When the SRv6 packet uses the encapsulation method of using the IPv6 destination address to carry multiple 16-bit SIDs, because the RH is not carried, according to the regulation of the RFC 8200, the IPv6 destination address should be used as a basis for calculating the checksum. However, a problem lies in that the IPv6 destination address is an IPv6 address of the first segment endpoint node of the SRv6 packet, and the IPv6 destination address of the SRv6 packet is changed when passing through each segment endpoint node, so that the last endpoint node cannot verify the checksum field according to the IPv6 destination address of the received SRv6 packet.

Aiming at the problem in the related art that when an SRv6 packet uses an encapsulation method of using an IPv6 destination address to carry multiple compressed SIDs, a basis for checksum calculation of the SRv6 packet cannot be determined, no effective solution has been proposed at present.

Therefore, there is a need for improvements in the related art to overcome the deficiencies in the related art.

### Summary

Embodiments of the present disclosure provide an address setting method and device, a storage medium, and an electronic device, which may at least solve the problem in the related art that when an SRv6 packet uses an encapsulation method of using an IPv6 destination address to carry multiple compressed SIDs, a basis for checksum calculation of the SRv6 packet cannot be determined.

According to one aspect of the embodiments of the present disclosure, an address setting method is provided, including: adding, by an encapsulation node, an Internet Protocol Version 6 (IPv6) routing header to a Segment Routing with IPv6 data plane (SRv6) packet including compressed Segment Identifiers (uSIDs); and setting a first IPv6 address of the IPv6 routing header to be an IPv6 address of a last endpoint node corresponding to the SRv6 packet, so as to determine a basis for checksum calculation.

According to another aspect of the embodiments of the present disclosure, an address setting device is provided, including: an adding module, configured to add an Internet Protocol Version 6 (IPv6) routing header to a Segment Routing with IPv6 data plane (SRv6) packet including compressed Segment Identifiers (uSIDs); and a setting module, configured to set a first IPv6 address of the IPv6 routing header to be an IPv6 address of a last endpoint node corresponding to the SRv6 packet, so as to determine a basis for checksum calculation.

According to yet another aspect of the embodiments of the present disclosure, a computer-readable storage medium is provided. The computer-readable storage medium stores a computer program, wherein the computer program, when running on a processor, causes the processor to execute the above address setting method.

According to still another aspect of the embodiments of the present disclosure, an electronic device is provided, including a memory and a processor, wherein the memory stores a computer program, and the processor is configured to run the computer program so as to execute the above address setting method.

By means of the present disclosure, an encapsulation node adds an IPv6 routing header to an SRv6 packet including uSIDs, and sets a first IPv6 address of the IPv6 routing header to be an IPv6 address of a last endpoint node corresponding to the SRv6 packet, so as to determine a basis for checksum calculation, thereby solving the problem in the related art that when an SRv6 packet uses an encapsulation method of using an IPv6 destination address to carry multiple compressed SIDs, a basis for checksum calculation of the SRv6 packet cannot be determined.

### Brief Description of the Drawings

The drawings described herein are intended to provide further understanding of the present disclosure, and form a part of the present disclosure. The exemplary embodiments of the present disclosure and the description thereof are used to explain the present disclosure, and do not form improper limits to the present disclosure. In the drawings:
Fig. 1 is a schematic diagram of an encapsulation format of an SRv6 packet carrying an SRH that includes multiple SIDs in the related art;
Fig. 2 is a schematic diagram of an encapsulation format of an SRv6 packet carrying an IPv6 destination address that includes multiple uSIDs in the related art;
Fig. 3 is a block diagram of the hardware structure of an exemplary router for executing an address setting method according to some embodiments of the present disclosure;
Fig. 4 is a flowchart (1) of an exemplary address setting method according to some embodiments of the present disclosure;
Fig. 5 is a schematic diagram of an encapsulation format of an SRv6 packet carrying uSIDs and an IPv6 routing header according to some embodiments of the present disclosure;
Fig. 6 is a format diagram of an exemplary IPv6 routing header according to some embodiments of the present disclosure;
Fig. 7 is a format diagram of an exemplary IPv6 segment routing header according to some embodiments of the present disclosure;
Fig. 8 is a flowchart (2) of an exemplary address setting method according to some embodiments of the present disclosure;
Fig. 9 is a schematic diagram of an encapsulation format of an SRv6 packet carrying an IPv6 destination address that includes multiple uSIDs according to Embodiment 1;
Fig. 10 is a flowchart (3) of an exemplary address setting method according to some embodiments of the present disclosure;
Fig. 11 is a schematic diagram of an encapsulation format of an SRv6 packet carrying an IPv6 destination address that includes multiple uSIDs according to Embodiment 2;
Fig. 12 is a flowchart (4) of an exemplary address setting method according to some embodiments of the present disclosure;
Fig. 13 is a schematic diagram of an encapsulation format of an SRv6 packet carrying an IPv6 destination address that includes multiple uSIDs according to Embodiment 3; and
Fig. 14 is a structural block diagram of an exemplary address setting device according to some embodiments of the present disclosure.

### Detailed Description

In order to make those having ordinary skill in the art better understand the solutions of the present disclosure, the technical solutions in the embodiments of the present disclosure are clearly and completely described as follows with reference to the accompanying drawings in the embodiments of the present disclosure. Apparently, the described embodiments are merely a part rather than all of the embodiments of the present disclosure. All other embodiments obtained by those having ordinary skill in the art based on the embodiments of the present disclosure without creative efforts shall fall within the scope of protection of the present disclosure.

It should be noted that terms such as "first" and "second" in the specification, claims and drawings of the present disclosure are used to distinguish similar objects, and are not necessarily used to describe a specific sequence or order. It should be understood that the data so used may be interchanged where appropriate so that embodiments of the present disclosure described herein may be implemented in sequences other than those illustrated or described herein. In addition, the terms "include" and "have", and any variations thereof, are intended to cover a non-exclusive inclusion, for example, a process, method, system, product, or apparatus that includes a series of operations or units is not necessarily limited to those operations or units that are expressly listed, but may include other operations or units that are not expressly listed or inherent to such process, method, product, or apparatus.

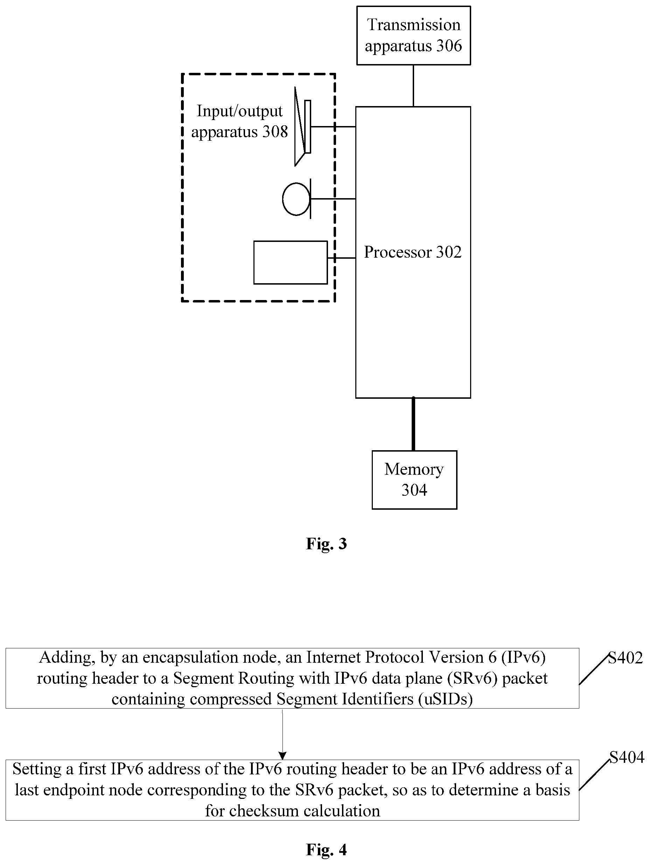

The method embodiments provided in the embodiments of the present disclosure may be executed in a router or a similar arithmetic device. Taking the execution on the router as an example, Fig. 3 is a block diagram of the hardware structure of an exemplary router for executing an address setting method according to some embodiments of the present disclosure. As shown in Fig. 3, the router may include one or more processors 303 (only one is shown in Fig. 3) (each of the one or more processors 303 may include, but are not limited to, a Microprocessor Unit (MPU) or a Programmable logic device (PLD)) and a memory 304 configured to store data. In an exemplary embodiment, the router may further include a transmission apparatus 306 for achieving a communication function and an input/output apparatus 308. Those having ordinary skill in the art may understand that the structure shown in Fig. 3 is merely exemplary, which does not limit the structure of the router. For example, the router may also include more or fewer components than shown in FIG 3, or have an equivalent function to that shown in FIG. 3 or a different configuration than that shown in FIG. 3.

The memory 304 may be configured to store a computer program, for example, a software program and modules of a router, such as a computer program corresponding to the address setting method in the embodiments of the present disclosure. The one or more processors 303 run the computer program stored in the memory 304, so as to execute various functional applications and data processing, that is, to implement the foregoing methods. The transmission apparatus 306 is configured to receive or transmit data.

Fig. 4 is a flowchart (1) of an exemplary address setting method according to some embodiments of the present disclosure. As shown in Fig. 4, the address setting method includes the following operations S402 and S404.

At operation S402, an encapsulation node adds an IPv6 routing header to an SRv6 packet including compressed Segment Identifiers (uSIDs).

At operation S404, the encapsulation node sets a first IPv6 address of the IPv6 routing header to be an IPv6 address of a last endpoint node corresponding to the SRv6 packet, so as to determine a basis for checksum calculation.

In the embodiments of the present disclosure, an encapsulation node adds an IPv6 routing header to an SRv6 packet including uSIDs, and sets a first IPv6 address of the IPv6 routing header to be an IPv6 address of a last endpoint node corresponding to the SRv6 packet, so as to determine a basis for checksum calculation, thereby solving the problem in the related art that when an SRv6 packet uses an encapsulation method of using an IPv6 destination address to carry multiple compressed SIDs, a basis for checksum calculation of the SRv6 packet cannot be determined.

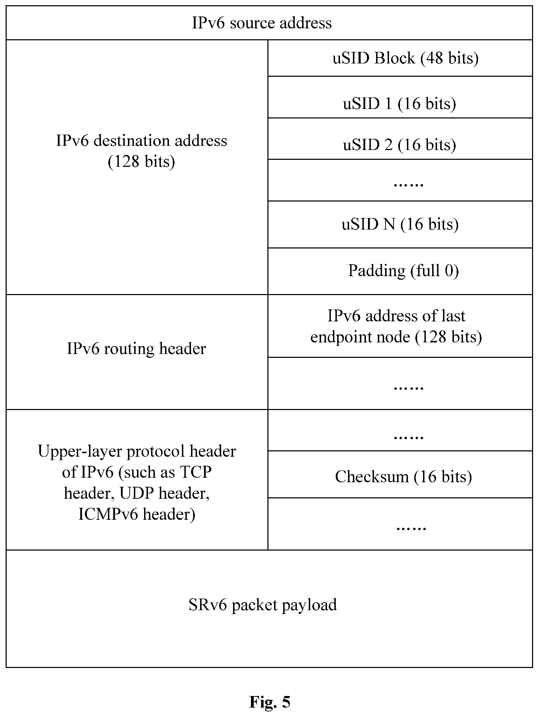

It should be noted that, in order to facilitate the understanding of the foregoing operations, further details are described by taking Fig. 5 as an example. Fig. 5 is a schematic diagram of an encapsulation format of an SRv6 packet carrying uSIDs and an IPv6 routing header according to some embodiments of the present disclosure. In Fig. 5, because the compressed segment identifier uSID is carried, the IPv6 destination address of the SRv6 packet does not point to an IPv6 address of a last endpoint node of the SRv6 packet, but points to a first endpoint node that the SRv6 packet needs to pass through, and therefore, it is not reasonable to directly use the IPv6 destination address of the SRv6 packet as a basis for checksum calculation. In order to solve this problem, the encapsulation node adds an IPv6 routing header to an SRv6 packet including compressed segment identifiers (uSIDs), and since a first IPv6 address included in the IPv6 routing header is set to be the IPv6 address of the last endpoint node of the SRv6 packet, the encapsulation node may use the IPv6 address of the last endpoint node of the SRv6 packet as a basis for checksum calculation, which also complies with the requirement of IETF standard RFC 8200.

In an exemplary embodiment, a routing type of the IPv6 routing header added to the SRv6 packet may be set to be a routing type 4 of a segment routing header, and a flag bit in the segment routing header may be set as 1 so as to distinguish the IPv6 routing header from other segment routing headers; or the routing type of the IPv6 routing header added to the SRv6 packet may be set to be another routing type value that is different from the routing type 4 of the segment routing header, so as to distinguish the IPv6 routing header from the segment routing header.

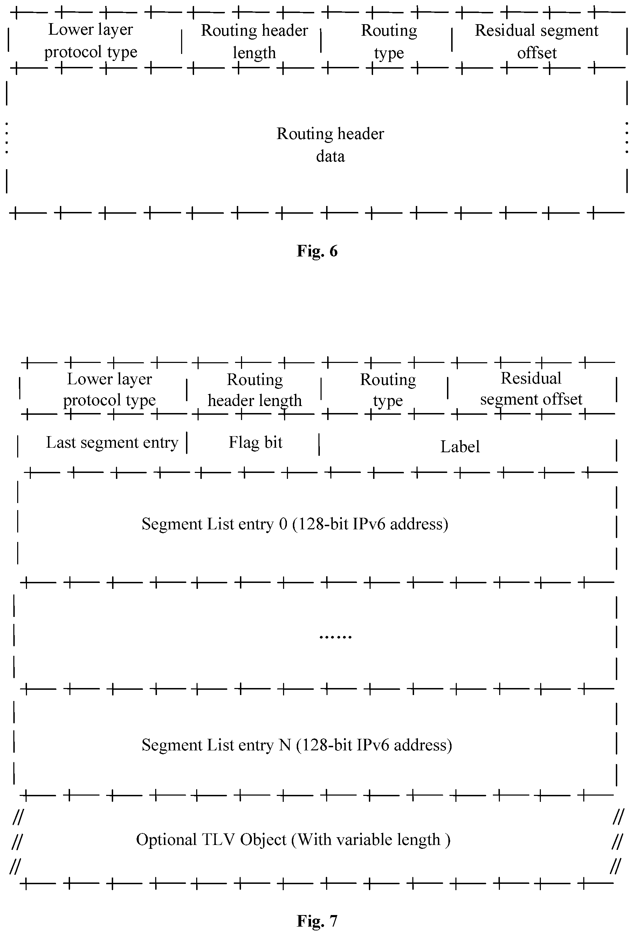

It should be noted that, although the IPv6 packet is allowed to carry routing headers of various routing types, one IPv6 packet carries at most one routing header, which is further described with reference to Fig. 6. Fig. 6 is a format diagram of an exemplary IPv6 routing header according to some embodiments of the present disclosure. As shown in Fig. 6, the IPv6 routing header includes a routing type field, and this routing type field is used to distinguish different routing header types.

In the present embodiment, the segment routing header is a routing header of the routing type 4. Fig. 7 is a format diagram of an exemplary IPv6 segment routing header according to some embodiments of the present disclosure. As shown in Fig. 7, the segment routing header carries 8-bit flag bits, and each flag bit may be used to indicate different node behaviors.

It should be further noted that, according to the related art, when the compressed SIDs included in the IPv6 destination address of the SRv6 packet are not enough, more compressed SIDs may be carried by using the IPv6 address in the IPv6 segment routing header. Hence, in this operation, the segment routing header that is added to the SRv6 packet by the encapsulation node and includes the new flag bit may include only one IPv6 address, and may alternatively include multiple IPv6 addresses, so as to carry more compressed SIDs. In a case where multiple IPv6 addresses are included, the first IPv6 address is set to be the IPv6 address of the last endpoint node of the SRv6 packet, and the other IPv6 addresses may still include multiple compressed SIDs according to the description in the related art, wherein the value of the residual segment offset field of the IPv6 address may also adopt the description in the related art.

In an exemplary embodiment, a second-to-last segment endpoint node corresponding to the SRv6 packet replaces an IPv6 destination address of the SRv6 packet with the first IPv6 address of the IPv6 routing header, wherein the second-to-last segment endpoint node is a segment endpoint node that the SRv6 packet passes through in a transmission process of the SRv6 packet; and the second-to-last segment endpoint node forwards the SRv6 packet to a last segment endpoint node.

It should be noted that each intermediate segment endpoint node that the SRv6 packet passes through in the transmission process modifies the IPv6 destination address of the SRv6 packet, so that the modified IPv6 destination address of the SRv6 packet points to a next segment endpoint node to which the SRv6 packet is to be further forwarded in the transmission process, and the next segment endpoint node may be an intermediate segment endpoint node before the last segment endpoint node, and may also be the last segment endpoint node, that is, the last endpoint node.

In an exemplary embodiment, the second-to-last segment endpoint node replaces the IPv6 destination address of the SRv6 packet with the first IPv6 address of the IPv6 routing header in a direct replacement manner.

In the present embodiment, after receiving the SRv6 packet, a segment endpoint node other than the last segment endpoint node modifies the IPv6 destination address of the SRv6 packet according to the compressed SID, and maintains the first IPv6 address included in the IPv6 routing header unchanged. The second-to-last segment endpoint node no longer modifies the IPv6 destination address according to the compressed SID, but replaces the IPv6 destination address with the first IPv6 address included in the IPv6 routing header in a direct replacement manner. Since the first IPv6 address included in the IPv6 routing header has been set to be the IPv6 address of the last endpoint node of the SRv6 packet, the IPv6 destination address after the replacement points to the last endpoint node. In addition, the second-to-last segment endpoint node modifies, according to the related art, the residual segment offset in the segment routing header including the new flag bit.

In an exemplary embodiment, after the second-to-last segment endpoint node forwards the SRv6 packet to the last segment endpoint node, when verifying a checksum carried in the SRv6 packet, the last segment endpoint node performs the checksum calculation according to the IPv6 destination address.

In the present embodiment, since the checksum field carried in the SRv6 packet is located in an IPv6 upper layer protocol packet header such as a TCP packet header, a UDP packet header, or an ICMPv6 packet header between the IPv6 packet header and the IPv6 payload, any intermediate segment endpoint node that the SRv6 packet passes through in the transmission process does not modify or verify the checksum field carried in the SRv6 packet, and only the last segment endpoint node needs to check the checksum field carried in the SRv6 packet and verify the correctness of the SRv6 packet, so as to ensure the integrity of the SRv6 packet in the transmission process, that is, to confirm that the SRv6 packet has not been tampered with in the transmission process. Further, in the SRv6 packet received by the last segment endpoint node, the IPv6 destination address is consistent with the first IPv6 address included in the IPv6 routing header, and the first IPv6 address included in the IPv6 routing header has been previously replaced with the IPv6 address of the last endpoint node corresponding to the SRv6 packet, therefore, both the IPv6 destination address and the first IPv6 address included in the IPv6 routing header are consistent with the IPv6 address of the last endpoint node corresponding to the SRv6 packet. Further, the IPv6 destination address is used as the basis for checksum calculation, which ensures that the calculation basis used by the last endpoint node in calculating the checksum is consistent with the calculation basis used by the encapsulation node in calculating the checksum, that is, the IPv6 address of the last endpoint node corresponding to the SRv6 packet is used as the calculation basis.

In an exemplary embodiment, in a case where the SRv6 packet includes a Transmission Control Protocol (TCP) packet header, the encapsulation node performs the checksum calculation according to the IPv6 address of the last endpoint node corresponding to the SRv6 packet, and fills a TCP checksum field in the TCP packet header with a checksum obtained by the checksum calculation; and the last endpoint node performs the checksum calculation, and compares a result of the checksum calculation with the checksum carried in the SRv6 packet for verification.

In an exemplary embodiment, in a case where the SRv6 packet includes a User Datagram Protocol (UDP) packet header, the encapsulation node performs the checksum calculation according to the IPv6 address of the last endpoint node corresponding to the SRv6 packet, and fills a UDP checksum field in the UDP packet header with a checksum obtained by the checksum calculation; and the last endpoint node performs the checksum calculation, and compares a result of the checksum calculation with the checksum carried in the SRv6 packet for verification.

In an exemplary embodiment, in a case where the SRv6 packet includes an Internet Control Message Protocol version 6 (ICMPv6) packet header, the encapsulation node performs the checksum calculation according to the IPv6 address of the last endpoint node corresponding to the SRv6 packet, and fills an ICMPv6 checksum field in the ICMPv6 packet header with a checksum obtained by the checksum calculation of the checksum; and the last endpoint node performs the checksum calculation, and compares a result of the checksum calculation with the checksum carried in the SRv6 packet for verification.

The address setting method is further described in combination with the following embodiments.

### Embodiment 1

In Embodiment 1, an encapsulation node inserts a new type IPv6 routing header into an SRv6 packet carrying compressed SIDs, wherein a routing type of the new type IPv6 routing header is a routing type value different from the routing type 4 of the segment routing header, and the upper layer protocol of the IPv6 in the SRv6 packet is the TCP protocol.

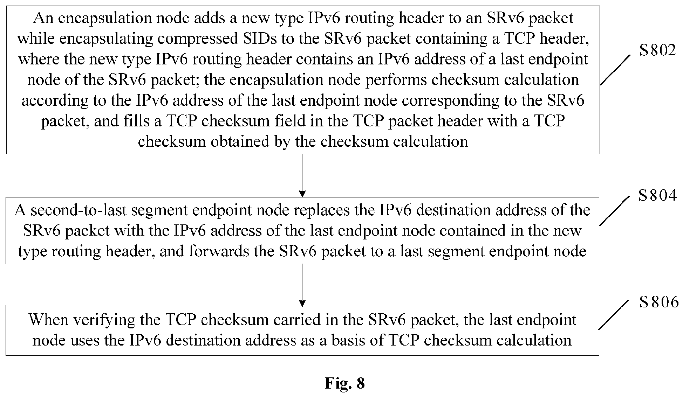

Fig. 8 is a flowchart (2) of an exemplary address setting method according to some embodiments of the present disclosure. As shown in Fig. 8, the address setting method includes the following operations 802 to 806.

At operation 802, an encapsulation node adds a new type IPv6 routing header to an SRv6 packet while encapsulating compressed SIDs to the SRv6 packet containing a TCP header, where the new type IPv6 routing header contains an IPv6 address of a last endpoint node of the SRv6 packet; the encapsulation node performs checksum calculation according to the IPv6 address of the last endpoint node corresponding to the SRv6 packet, and fills a TCP checksum field in the TCP packet header with a TCP checksum obtained by the checksum calculation.

At operation 804, a second-to-last segment endpoint node replaces the IPv6 destination address of the SRv6 packet with the IPv6 address of the last endpoint node contained in the new type routing header, and forwards the SRv6 packet to a last segment endpoint node.

At operation 806, when verifying the TCP checksum carried in the SRv6 packet, the last endpoint node uses the IPv6 destination address as a basis of TCP checksum calculation.

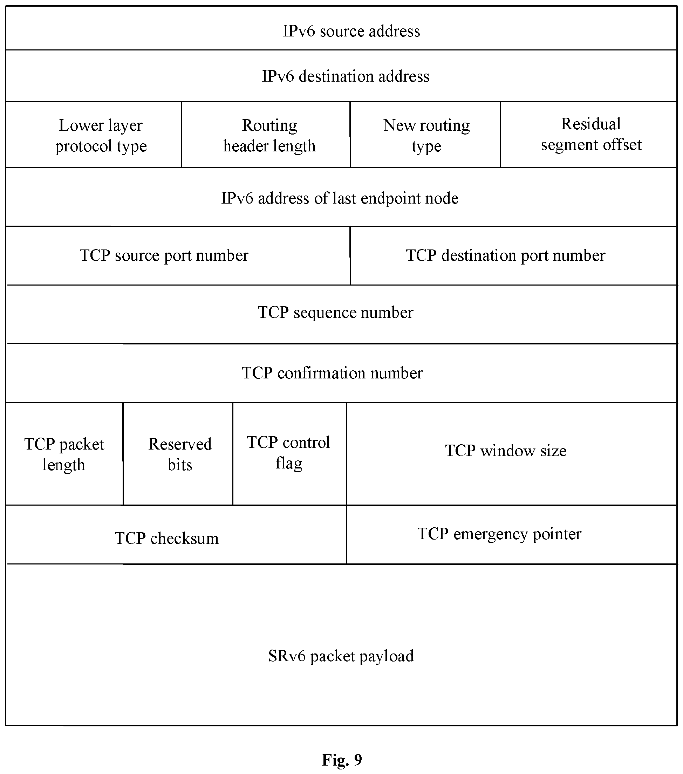

The above operations are described with reference to Fig. 9. Fig. 9 is a schematic diagram of an encapsulation format of an SRv6 packet carrying an IPv6 destination address that includes multiple uSIDs according to Embodiment 1. As shown in Fig. 9, because the compressed segment identifier uSID is carried, the IPv6 destination address of the SRv6 packet does not point to an IPv6 address of a last endpoint node of the SRv6 packet, but points to a first endpoint node that the SRv6 packet needs to pass through. In order to solve this problem, the encapsulation node adds a new type IPv6 routing header to an SRv6 packet including a TCP header, since the first IPv6 address included in the new type IPv6 routing header is set to be an IPv6 address of a last endpoint node of the SRv6 packet, the encapsulation node can perform checksum calculation according to the IPv6 address of the last endpoint node corresponding to the SRv6 packet, and fill a checksum obtained by the checksum calculation into a TCP checksum field in the TCP packet header.

It should be noted that in operation 804, after receiving the SRv6 packet, the other endpoint nodes except the second-to-last endpoint node modify the IPv6 destination address of the SRv6 packet according to the compressed SID, and keep the new type routing header unchanged. The second-to-last segment endpoint node no longer modifies the IPv6 destination address according to the compressed SID, but replaces the IPv6 destination address with the IPv6 address of the last endpoint node included in the new type routing header in a direct replacement manner.

It should be noted that, in operation 806, in the SRv6 packet received by the last segment endpoint node, the IPv6 destination address is consistent with the IPv6 address of the last endpoint node included in the new type routing header, therefore, the IPv6 destination address is used as the calculation basis of the TCP checksum, which ensures that the calculation basis used by the last endpoint node when verifying the TCP checksum is consistent with the calculation basis used by the encapsulation node when generating and filling in the TCP checksum.

### Embodiment 2

In Embodiment 2, an encapsulation node inserts a segment routing header including a new flag bit into an SRv6 packet carrying compressed SIDs, wherein the upper layer protocol of the IPv6 in the SRv6 packet is the UDP protocol.

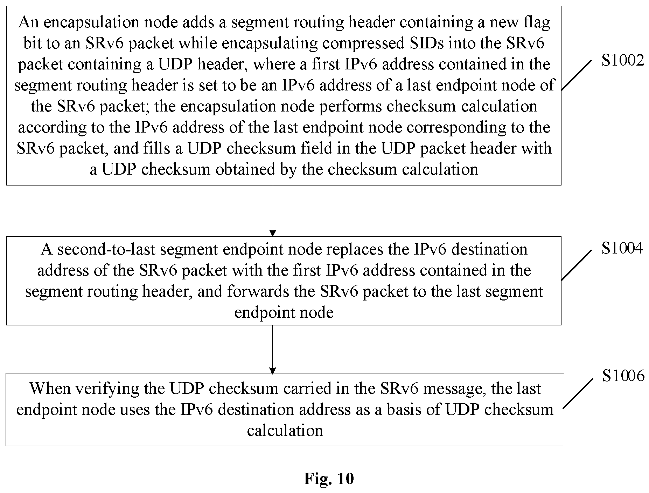

Fig. 10 is a flowchart (3) of an exemplary address setting method according to some embodiments of the present disclosure. As shown in Fig. 10, the address setting method includes the following operations 1002 to 1006.

At operation 1002, an encapsulation node adds a segment routing header containing a new flag bit to an SRv6 packet while encapsulating compressed SIDs into the SRv6 packet containing a UDP header, where a first IPv6 address contained in the segment routing header is set to be an IPv6 address of a last endpoint node of the SRv6 packet; the encapsulation node performs checksum calculation according to the IPv6 address of the last endpoint node corresponding to the SRv6 packet, and fills a UDP checksum field in the UDP packet header with a UDP checksum obtained by the checksum calculation.

At operation 1004, a second-to-last segment endpoint node replaces the IPv6 destination address of the SRv6 packet with the first IPv6 address contained in the segment routing header, and forwards the SRv6 packet to the last segment endpoint node.

At operation 1006, when verifying the UDP checksum carried in the SRv6 message, the last endpoint node uses the IPv6 destination address as a basis of UDP checksum calculation.

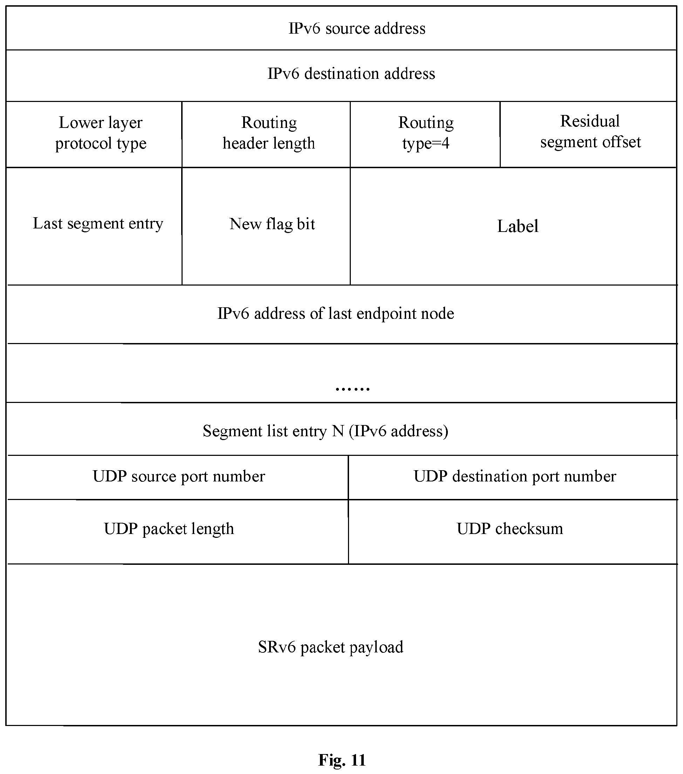

The above operations are described with reference to Fig. 11. Fig. 11 is a schematic diagram of an encapsulation format of an SRv6 packet carrying an IPv6 destination address that includes multiple uSIDs according to Embodiment 2. As shown in Fig. 11, because the compressed segment identifier uSID is carried, the IPv6 destination address of the SRv6 packet does not point to an IPv6 address of a last endpoint node of the SRv6 packet, but points to a first endpoint node that the SRv6 packet needs to pass through. In order to solve this problem, the encapsulation node adds a segment routing header including a new flag bit to an SRv6 packet including a UDP header, since the first IPv6 address included in the segment routing header is set to be an IPv6 address of a last endpoint node of the SRv6 packet, the encapsulation node can perform checksum calculation according to the IPv6 address of the last endpoint node corresponding to the SRv6 packet, and fill a checksum obtained by the checksum calculation into a UDP checksum field in the UDP packet header.

It should be noted that, in operation 1002, the segment routing header including the new flag bit and added by the encapsulation node to the SRv6 packet may include not only one IPv6 address, but also may include multiple IPv6 addresses. In the case of including multiple IPv6 addresses, except that the first IPv6 address is set to be the IPv6 address of the last endpoint node of the SRv6 packet, other IPv6 addresses may still include multiple compressed SIDs, and the value of the residual segment offset field may use any implementation solution in the related art.

It should be noted that in operation 1004, after receiving the SRv6 packet, the other endpoint nodes except the second-to-last segment endpoint node modify the IPv6 destination address of the SRv6 packet according to the compressed SID, and keep the segment routing header unchanged. The second-to-last segment endpoint node no longer modifies the IPv6 destination address according to the compressed SID, but replaces the IPv6 destination address with the first IPv6 address included in the segment routing header including the new flag bit, i.e., the IPv6 address of the last endpoint node, in a direct replacement manner. The second-to-last segment endpoint node may modify the residual segment offset in the segment routing header including the new flag bit by using any implementation solution in the related art.

It should be noted that, in operation 1006, in the SRv6 packet received by the last endpoint node, the IPv6 destination address is consistent with the first IPv6 address in the segment routing header including the new flag bit, that is, both the IPv6 destination address and the first IPv6 address are the IPv6 address of the last endpoint node; therefore, the IPv6 destination address is used as the calculation basis of the UDP checksum, which ensures that the calculation basis used by the last endpoint node when verifying the UDP checksum is consistent with the calculation basis used by the encapsulation node when generating and filling in the UDP checksum.

### Embodiment 3

In Embodiment 3, an encapsulation node inserts a segment routing header including the new flag bit into an SRv6 packet carrying compressed SIDs, wherein the upper layer protocol of the IPv6 in the SRv6 packet is the ICMPv6 protocol.

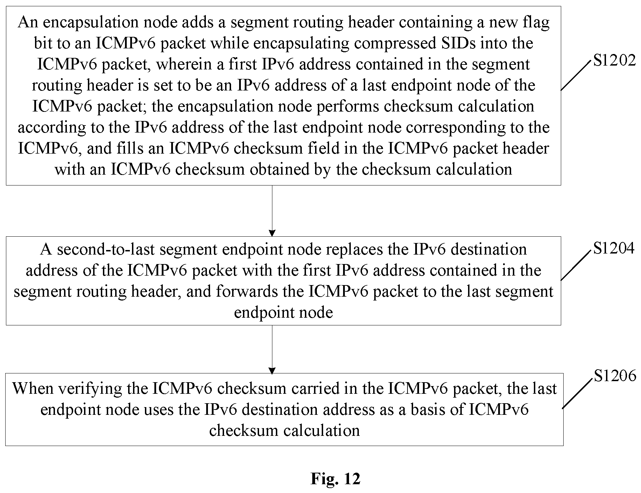

Fig. 12 is a flowchart (4) of an exemplary address setting method according to some embodiments of the present disclosure. As shown in Fig. 12, the address setting method includes the following operations 1202 to 1206.

At operation 1202, an encapsulation node adds a segment routing header containing a new flag bit to an ICMPv6 packet (an SRv6 packet carrying an ICMPv6 message) while encapsulating compressed SIDs into the ICMPv6 packet, wherein a first IPv6 address contained in the segment routing header is set to be an IPv6 address of a last endpoint node of the ICMPv6 packet; the encapsulation node performs checksum calculation according to the IPv6 address of the last endpoint node corresponding to the ICMPv6, and fills an ICMPv6 checksum field in the ICMPv6 packet header with an ICMPv6 checksum obtained by the checksum calculation.

At operation 1204, a second-to-last segment endpoint node replaces the IPv6 destination address of the ICMPv6 packet with the first IPv6 address contained in the segment routing header, and forwards the ICMPv6 packet to the last segment endpoint node.

At operation 1206, when verifying the ICMPv6 checksum carried in the ICMPv6 packet, the last endpoint node uses the IPv6 destination address as a basis of ICMPv6 checksum calculation.

It should be noted that, the ICMPv6 packet in the foregoing operations is an SRv6 packet carrying an ICMPv6 message, and the SRv6 packet carrying the ICMPv6 message may be referred to as an ICMPv6 packet for short, and may also be referred to as an SRv6 packet for short.

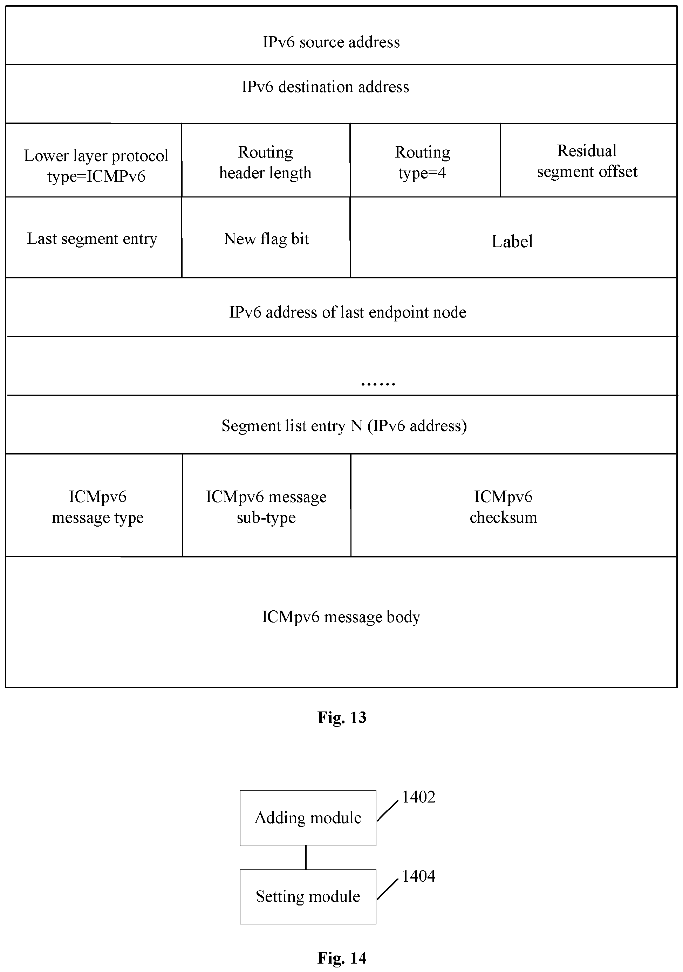

The above operations are described with reference to Fig. 13. Fig. 13 is a schematic diagram of an encapsulation format of an SRv6 packet carrying an IPv6 destination address that includes multiple uSIDs according to Embodiment 3. As shown in Fig. 13, because the compressed segment identifier uSID is carried, the IPv6 destination address of the SRv6 packet does not point to an IPv6 address of a last endpoint node of the SRv6 packet, but points to a first endpoint node that the SRv6 packet needs to pass through. In order to solve this problem, the encapsulation node adds a segment routing header including a new flag bit to an ICMPv6 packet, since the first IPv6 address included in the segment routing header is set to be an IPv6 address of a last endpoint node of the ICMPv6 packet, the encapsulation node can perform checksum calculation according to the IPv6 address of the last endpoint node corresponding to the ICMPv6 packet, and fill a checksum obtained by the checksum calculation into an ICMPv6 checksum field in the ICMPv6 header.

It should be noted that, in operation 1202, the segment routing header including the new flag bit and added by the encapsulation node to the ICMPv6 packet may include only one IPv6 address, and may also include multiple IPv6 addresses. In the case of including multiple IPv6 addresses, except that the first IPv6 address is set to be the IPv6 address of the last endpoint node of the ICMPv6 packet, other IPv6 addresses still include multiple compressed SIDs according to the description in the related art, and the value of the residual segment offset field may use any implementation solution in the related art.

It should be noted that in operation 1204, after receiving the ICMPv6 packet, the other endpoint nodes except the second-to-last segment endpoint node modify the IPv6 destination address of the ICMPv6 packet according to the compressed SID, and keep the segment routing header unchanged. The second-to-last segment endpoint node no longer modifies the IPv6 destination address according to the compressed SID, but replaces the IPv6 destination address with the first IPv6 address included in the segment routing header including the new flag bit, i.e., the IPv6 address of the last endpoint node, in a direct replacement manner. The second-to-last segment endpoint node may modify the residual segment offset in the segment routing header including the new flag bit by using any implementation solution in the related art.

It should be noted that, in operation 1206, in the ICMPv6 packet received by the last endpoint node, the IPv6 destination address is consistent with the first IPv6 address in the segment routing header including the new flag bit, that is, both the IPv6 destination address and the first IPv6 address are the IPv6 address of the last endpoint node; therefore, the IPv6 destination address is used as the calculation basis of the ICMPv6 checksum, which ensures that the calculation basis used by the last endpoint node when verifying the ICMPv6 checksum is consistent with the calculation basis used by the encapsulation node when generating and filling in the ICMPv6 checksum.

Fig. 14 is a structural block diagram of an exemplary address setting device according to some embodiments of the present disclosure. As shown in Fig. 14, the address setting device includes:
an adding module 1402, configured to add an Internet Protocol Version 6 (IPv6) routing header to a Segment Routing with IPv6 data plane (SRv6) packet including compressed Segment Identifiers (uSIDs); and
a setting module 1404, configured to set a first IPv6 address of the IPv6 routing header to be an IPv6 address of a last endpoint node corresponding to the SRv6 packet, so as to determine a basis for checksum calculation.

By means of the device, an encapsulation node adds an IPv6 routing header to an SRv6 packet including uSIDs, and sets a first IPv6 address of the IPv6 routing header to be an IPv6 address of a last endpoint node corresponding to the SRv6 packet, so as to determine a basis for checksum calculation. By means of the device, the problem in the related art that when an SRv6 packet uses an encapsulation method of using an IPv6 destination address to carry multiple compressed SIDs, a basis for checksum calculation of the SRv6 packet cannot be determined can be solved.

In an exemplary embodiment, the adding module 1402 is further configured to set a routing type of the IPv6 routing header added to the SRv6 packet to be a routing type 4 of a segment routing header, and set a flag bit in the segment routing header as 1 so as to distinguish the IPv6 routing header from other segment routing headers; or set the routing type of the IPv6 routing header added to the SRv6 packet to be another routing type value that is different from the routing type 4 of the segment routing header, so as to distinguish the IPv6 routing header from the segment routing header.

In an exemplary embodiment, a second-to-last segment endpoint node corresponding to the SRv6 packet replaces an IPv6 destination address of the SRv6 packet with the first IPv6 address of the IPv6 routing header, wherein the second-to-last segment endpoint node is a segment endpoint node that the SRv6 packet passes through in a transmission process of the SRv6 packet; and the second-to-last segment endpoint node forwards the SRv6 packet to a last segment endpoint node.

In an exemplary embodiment, the second-to-last segment endpoint node replaces the IPv6 destination address of the SRv6 packet with the first IPv6 address of the IPv6 routing header in a direct replacement manner.

In an exemplary embodiment, after the second-to-last segment endpoint node forwards the SRv6 packet to the last segment endpoint node, when verifying a checksum carried in the SRv6 packet, the last segment endpoint node performs the checksum calculation according to the IPv6 destination address.

In an exemplary embodiment, the setting module 1406 is further configured to, in a case where the SRv6 packet includes a Transmission Control Protocol (TCP) packet header, perform the checksum calculation according to the IPv6 address of the last endpoint node corresponding to the SRv6 packet, and fill a TCP checksum field in the TCP packet header with a checksum obtained by the checksum calculation; and the last endpoint node is configured to perform the checksum calculation, and compare a result of the checksum calculation with the checksum carried in the SRv6 packet for verification.

In an exemplary embodiment, the setting module 1406 is further configured to, in a case where the SRv6 packet includes a User Datagram Protocol (UDP) packet header, perform the checksum calculation according to the IPv6 address of the last endpoint node corresponding to the SRv6 packet, and fill a UDP checksum field in the UDP packet header with a checksum obtained by the checksum calculation; and the last endpoint node is configured to perform the checksum calculation, and compare a result of the checksum calculation with the checksum carried in the SRv6 packet for verification.

In an exemplary embodiment, the setting module 1406 is further configured to, in a case where the SRv6 packet includes an Internet Control Message Protocol version 6 (ICMPv6) packet header, perform the checksum calculation according to the IPv6 address of the last endpoint node corresponding to the SRv6 packet, and fill an ICMPv6 checksum field in the ICMPv6 packet header with a checksum obtained by the checksum calculation of the checksum; and the last endpoint node is configured to perform the checksum calculation, and compare a result of the checksum calculation with the checksum carried in the SRv6 packet for verification.

For specific examples in the present embodiment, reference may be made to the examples described in the foregoing embodiments and exemplary embodiments, and details are not repeatedly described in the present embodiment.

Embodiments of the present disclosure further provide an electronic device, including a memory and a processor. The memory stores a computer program. The processor is configured to run the computer program to execute operations in any one of the method embodiments.

In the present embodiment, the processor may be arranged to execute the following operations S1 and S2 by means of a computer program.

At operation S1, an encapsulation node adds an IPv6 routing header to an SRv6 packet including compressed Segment Identifiers (uSIDs).

At operation S2, the encapsulation node sets a first IPv6 address of the IPv6 routing header to be an IPv6 address of a last endpoint node corresponding to the SRv6 packet, so as to determine a basis for checksum calculation.

Alternatively, in another embodiment, the processor may be configured to perform the following operations S1 and S2 by means of a computer program.

At operation S1, an encapsulation node adds an IPv6 routing header to an SRv6 packet including compressed Segment Identifiers (uSIDs).

At operation S2, the encapsulation node sets a first IPv6 address of the IPv6 routing header to be an IPv6 address of a last endpoint node corresponding to the SRv6 packet, so as to determine a basis for checksum calculation.

In an exemplary embodiment, the electronic device may further include a transmission apparatus and an input/output apparatus, wherein the transmission apparatus is connected to the processor, and the input/output apparatus is connected to the processor.

For specific examples in the present embodiment, reference may be made to the examples described in the foregoing embodiments and exemplary embodiments, and details are not repeatedly described in the present embodiment.

Obviously, those having ordinary skill in the art should understand that each module or each operation of the present disclosure may be implemented by a universal computing device, and the modules or operations may be concentrated on a single computing device or distributed on a network formed by multiple computing devices, and may be implemented by program codes executable for the computing devices, so that the modules or operations may be stored in a storage device for execution with the computing devices. The shown or described operations may be executed in sequences different from those described here in some cases, or may form each integrated circuit module respectively, or multiple modules or operations therein may form a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall belong to the scope of protection of the present disclosure.

## Claims

1. An address setting method, comprising:
adding, by an encapsulation node, an Internet Protocol Version 6, IPv6, routing header to a Segment Routing with IPv6 data plane, SRv6, packet comprising compressed Segment Identifiers, uSIDs; and
setting a first IPv6 address of the IPv6 routing header to be an IPv6 address of a last endpoint node corresponding to the SRv6 packet, so as to determine a basis for checksum calculation.

2. The address setting method according to claim 1, further comprising:
replacing, by a second-to-last segment endpoint node corresponding to the SRv6 packet, an IPv6 destination address of the SRv6 packet with the first IPv6 address of the IPv6 routing header, wherein the second-to-last segment endpoint node is a segment endpoint node that the SRv6 packet passes through in a transmission process of the SRv6 packet; and
forwarding, by the second-to-last segment endpoint node, the SRv6 packet to a last segment endpoint node.

3. The address setting method according to claim 2, wherein after forwarding, by the second-to-last segment endpoint node, the SRv6 packet to the last segment endpoint node, the address setting method further comprises:
when verifying a checksum carried in the SRv6 packet, performing, by the last segment endpoint node, the checksum calculation according to the IPv6 destination address.

4. The address setting method according to claim 2, wherein replacing, by the second-to-last segment endpoint node corresponding to the SRv6 packet, the IPv6 destination address of the SRv6 packet with the first IPv6 address of the IPv6 routing header comprises:
replacing, by the second-to-last segment endpoint node, the IPv6 destination address of the SRv6 packet with the first IPv6 address of the IPv6 routing header in a direct replacement manner.

5. The address setting method according to claim 1, further comprising:
setting a routing type of the IPv6 routing header added to the SRv6 packet to be a routing type 4 of a segment routing header, and setting a flag bit in the segment routing header as 1 so as to distinguish the IPv6 routing header from other segment routing headers;
or,
setting the routing type of the IPv6 routing header added to the SRv6 packet to be another routing type value that is different from the routing type 4 of the segment routing header, so as to distinguish the IPv6 routing header from the segment routing header.

6. The address setting method according to claim 1, further comprising:
in a case where the SRv6 packet comprises a Transmission Control Protocol, TCP, packet header, performing, by the encapsulation node, the checksum calculation according to the IPv6 address of the last endpoint node corresponding to the SRv6 packet, and filling, by the encapsulation node, a TCP checksum field in the TCP packet header with a checksum obtained by the checksum calculation; and
performing, by the last endpoint node, the checksum calculation, and comparing, by the last endpoint node, a result of the checksum calculation with the checksum carried in the SRv6 packet for verification.

7. The address setting method according to claim 1, further comprising:
in a case where the SRv6 packet comprises a User Datagram Protocol, UDP, packet header, performing, by the encapsulation node, the checksum calculation according to the IPv6 address of the last endpoint node corresponding to the SRv6 packet, and filling, by the encapsulation node, a UDP checksum field in the UDP packet header with a checksum obtained by the checksum calculation; and
performing, by the last endpoint node, the checksum calculation, and comparing, by the last endpoint node, a result of the checksum calculation with the checksum carried in the SRv6 packet for verification.

8. The address setting method according to claim 1, further comprising:
in a case where the SRv6 packet comprises an Internet Control Message Protocol version 6, ICMPv6, packet header, performing, by the encapsulation node, the checksum calculation according to the IPv6 address of the last endpoint node corresponding to the SRv6 packet, and filling, by the encapsulation node, an ICMPv6 checksum field in the ICMPv6 packet header with a checksum obtained by the checksum calculation of the checksum; and
performing, by the last endpoint node, the checksum calculation, and comparing, by the last endpoint node, a result of the checksum calculation with the checksum carried in the SRv6 packet for verification.

9. An address setting device, comprising:
an adding module, configured to add an Internet Protocol Version 6, IPv6, routing header to a Segment Routing with IPv6 data plane, SRv6, packet comprising compressed Segment Identifiers, uSIDs; and
a setting module, configured to set a first IPv6 address of the IPv6 routing header to be an IPv6 address of a last endpoint node corresponding to the SRv6 packet, so as to determine a basis for checksum calculation.

10. A storage medium, wherein the storage medium stores a computer program, and the computer program, when running on a processor, causes the processor to execute the address setting method according to any one of claims 1 to 8.

11. An electronic device, comprising a memory and a processor, wherein the memory stores a computer program, and the processor is configured to run the computer program so as to execute the address setting method according to any one of claims 1 to 8.
